# EUROPÄISCHE PATENTSCHRIFT

(11) **EP 0 630 803 B1**
(45) Veröffentlichungstag und Bekanntmachung des Hinweises auf die Patenterteilung: **28.08.1996**
(21) Anmeldenummer: 94108981.5
(22) Anmeldetag: 11.06.1994
(51) Int. Cl.: B62J 39/00, B60B 31/02, G01B 5/255

(54) **Fahrradzentrierhilfe**
Bicycle wheel aligning device
Dispositif servant à aligner les roues de bicyclette

(30) Priorität: 22.06.1993 DE 4320585
(43) Veröffentlichungstag der Anmeldung: 28.12.1994
(73) Patentinhaber: Braun, Gert, D-78567 Fridingen (DE)
(72) Erfinder: Braun, Gert, D-78567 Fridingen (DE)
(74) Vertreter: Patentanwälte Westphal, Buchner, Mussgnug Neunert, Göhring

(56) Entgegenhaltungen:
- CH-A- 252 476
- DE-A- 1 548 307
- DE-A- 2 813 775
- DE-A- 3 434 167
- DE-C- 668 900
- NL-A- 7 805 900
- US-A- 3 956 829
- US-A- 5 193 283
- US-A- 5 201 782
- US-A- 5 243 765

## Beschreibung

Die Erfindung betrifft eine Fahrradzentrierhilfe gemäß dem Oberbegriff des Anspruchs 1.

Vorrichtung, die zum Zentrieren von Fahrradfelgen dienen, sind seit langem bekannt. Zum Zentrieren muß das Rad ausgebaut werden und in eine Vorrichtung eingespannt werden. An entsprechenden Stiften läßt sich dann der Grad der Dejustierung ablesen. Zum Zentrieren werden die Speichen von Hand nachgezogen. Solche Zentriervorrichtungen werden hauptsächlich in Fahrradwerkstätten eingesetzt. Nachteilig an diesen bekannten Zentriervorrichtungen ist, daß sie relativ viel Platz beanspruchen, daß sie stabil sein müssen, daß sie relativ kostenaufwendig herzustellen sind und daß der richtige Drehsinn beim Nachziehen der Speichen nicht unmittelbar angezeigt wird.

Eine weitere Möglichkeit zum Zentrieren von Fahrradfelgen besteht darin, mit Hilfe eines Kreidestückchens die Abweichung der Fahrradfelge vom Mittellauf am äußeren Rand der Felge zu markieren und dann die Speichen entsprechend nachzuziehen. Nachteilig an dieser Methode ist, daß sie äußerst ungenau ist und daß sie keine Gewähr für die richtige Drehrichtung beim Nachziehen einer Speiche bietet.

Schließlich ist aus der NL-A-8705900, von der die Erfindung ausgeht, eine Fahrradzentrierhilfe bekannt geworden, die aus einer am Rahmen bzw. an der Gabel eines Fahrrads anbringbaren Spannvorrichtung, einem Schwenkarm und einer Meßuhr besteht. Der Meßstift der Meßuhr ist an die auszumessende Felge anlegbar, so daß der Seitenschlag der Felge meßbar ist. Nachteilig bei dieser Fahrradzentrierhilfe ist die vergleichsweise umständliche Handhabung beim Anlegen des Meßstifts an die Felge, da hierzu der Schwenkarm an der Gabel mittels der Spannvorrichtung exakt positioniert werden muß. Darüber hinaus ist die Fahrradzentrierhilfe lediglich zur Bestimmung des Seitenschlags der Felge verwendbar, nicht jedoch für weitere Meßaufgaben, wie beispielsweise zum Bestimmen des Höhenschlags der Felge oder des Lenkkopfspiels.

Der Erfindung liegt die Aufgabe zugrunde, eine Fahrradzentrierhilfe zu schaffen, mit der eine einfache schnelle Zentrierung möglich ist, die nur wenig Platz beansprucht, die eine Überprüfung der richtigen Drehrichtung beim Nachziehen einer Speiche ermöglicht und damit auch für Laien geeignet ist und deren Herstellungskosten relativ niedrig sind.

Gelöst wird diese Aufgabe durch die im Anspruch 1 angegebenen Merkmale. Vorteilhafte Weiterentwicklung der Erfindung sind in den Unteransprüchen angegeben.

Das wesentlichen Merkmal der Erfindung besteht darin, an einer mehrarmigen Halterung eine Meßuhr und eine Spannvorrichtung, die zum Befestigen der Zentrierhilfe am Fahrrad dient, vorzusehen.

Nachfolgend wird die Erfindung anhand eines in der Zeichnungen dargestellten Ausführungsbeispiels näher erläutert.

Es zeigen:

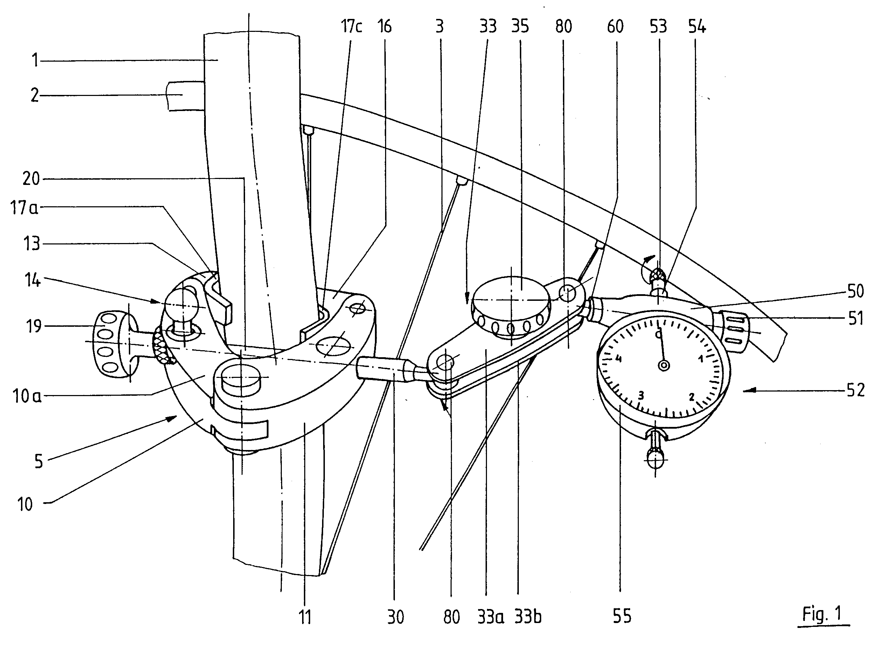

- Fig. 1:: Ansicht einer an einer Radgabel angebrachten Fahrradzentrierhilfe für die Korrektur des Seitenschlages.
- Fig. 2:: Ansicht einer an einer Radgabel angebrachten Fahrradzentrierhilfe für die Korrektur des Höhenschlages.
- Fig. 3:: Ansicht einer am Rahmen angebrachten Fahrradzentrierhilfe zum Ausmessen des Lenkkopfspiels.

Die Fahrradzentrierhilfe besteht im wesentlichen aus drei Teilen: einer Spannvorrichtung 5, einem Schwenkarm 33 und einer Meßuhr 52. Mit Hilfe der Spannvorrichtung 5 wird die Fahrradzentrierhilfe am Rahmen oder an der Radgabel 1 des Fahrrades befestigt. Die Spannvorrichtung 5 weist zwei gelenkig miteinander verbunden Spannarme 10 und 11 auf. Die beiden Spannarme 10 und 11 besitzen an ihren freien Enden einander gegenüberliegende Spannbacken 13, 14 und 16. Die Spannbacke 16 ist dabei schwenkbar am äußeren Spannarm 11 gelegt. Die beiden Spannbacken 13 und 14 sind an der Oberseite bzw. an der Unterseite des Spannarms 10 fest angebracht. Die Spannbacken 13, 14 und 16 umfassen die Radgabel 1 V-förmig. Die Innenseiten der Spannbacken 13, 14, 16 sind jeweils mit Gummiauflagen 17 zum Schutz der Radgabel 1 bzw. des Rahmens versehen. In einem weiteren Ausführungbeispiel sind die Spannbacken 13, 14 und 16 ganz aus Kunststoff. Die beiden gabelförmig angeordneten Spannarme 10 und 11 sind über eine Zugstange 20 verbunden, die einerends mit dem äußeren Spannarm 11 gelenkig verbunden ist und an deren anderem Ende ein Gewinde angebracht ist, das in einer Gewindebohrung einer Spannschraube 19 geführt ist. Die Spannschraube 19 besitzt einen Mitnehmer, der in einer Bohrung eines Kugelbolzens 22 gehalten ist. Mit Hilfe der Spannschraube 19 lassen sich die beiden Spannarme 10 und 11 gegeneinander verschwenken und damit die spannbacken 13, 14 und 16 an die Radgabel 1 pressen. Die Spannvorrichtung ist für Gabeln bzw. Rahmen mit einem Durchmesser von 6 bis 40 mm geeignet.

Am freien Ende des äußeren Spannarms 11 ist auf der der Spannbacke 16 gegenüberliegenden Außenseite ein nach außen abstehender Kugelbolzen 30 angebracht. Der Kugelbolzen 30 stellt eine gelenkige Verbindung zwischen Spannvorrichtung 5 und dem Schwenkarm 33 dar. An der Oberseite 10a des inneren Spannarms 10 ist der Kugelbolzen 22 vorgesehen, der eine alternative Befestigungsmöglichkeit für den Schwenkarm 33 bildet. Der Schwenkarm 33 besteht aus zwei einander gegenüberliegenden Teilen 33 a, b, die durch eine Klemmschraube 35 zusammengehalten werden und die vier Bohrungen 80 aufweisen, die Lageraufnahmen für die kugelförmigen Enden des Kugelbolzens 30 und eines weiteren Kugelbolzens 60 bilden. Der Schwenkarm 33 ist über den Kugelbolzen 60 mit einem stabförmigen Uhrenhalter 50 verbunden. Die Meßuhr 52 besitzt einen Rohransatz 54, in dem ein Teflon-Taststift 53 geführt ist. Der Rohransatz 54 sitzt drehbar und axial verschiebbar in einer Durchgangsbohrung des Uhrenhalters 50, die senkrecht zu dessen Längsachse verläuft. Er wird mit Hilfe der Klemmschraube 51 fixiert. Die Kugelgelenke (30 bzw. 60) erlauben eine Drehung um 360° um die Längsachse bzw. eine Schwenkung um ca. 200° um die Querachse des entsprechenden Kugelbolzens (30 bzw. 60).

Im folgenden ist die Funktionsweise der Fahrradzentrierhilfe näher erläutert. Die Zentrierhilfe wird in der Nähe der zu zentrierenden Felge am Rahmen, beispielsweise an der Radgabel 1 mit Hilfe der Spannvorrichtung 5 befestigt. Durch Anziehen der Spannschraube 19 werden der innere und der äußere Spannarm 10 bzw. 11 gegeneinander gezogen und dadurch die Spannbacken 13, 14 und 16 gegen die Radgabel 1 gepreßt. Da die Spannbacke 16 schwenkbar ist, ist eine Anpassung an verschiedene Rahmenformen gewährleistet. Der Hub der Spannschraube 19 ist so ausgelegt, daß die Spannvorrichtung 5 für Rahmendurchmesser zwischen 6 und 40 mm geeignet ist. Nach der Befestigung der Spannvorrichtung 5 am Rahmen wird die Meßuhr 52 so ausgerichtet, daß der Teflon-Taststift 53 parallel zur Achse des zu justierenden Rades verläuft. Dies ist aufgrund der Beweglichkeit des Schwenkarms 33 leicht möglich. Die beiden Klemmschrauben 35 und 51 sind gerade so fest angezogen, daß sie ein leichtes Verfahren der Meßuhr 52 und des Schwenkarms 33 ermöglichen und ein Nachziehen der beiden Klemmschrauben normalerweise nicht mehr nötig ist. Die Meßuhr 52 wird so justiert, daß sie gut ablesbar ist und daß der Teflon-Taststift 53 die Felge 2 gerade berührt. Durch Drehen des Rades wird nun die Stärke des Schlages ermittelt. Ist der Seitenschlag so stark, daß die Spitze des TeflonTaststifts 53 von der Felge 2 abhebt, so wird die Meßuhr 52 soweit in Richtung der Felge 2 verschoben, daß die Spitze des Teflon-Taststifts 53 während einer vollen Drehung permanent an der Felge 2 anliegt. Die Meßuhr 52 ist etwa 8 mn im Uhrenhalter 50 verschiebbar. Mit Hilfe eines Stellrings 55 läßt sich die Skala der Meßuhr 52 verdrehen. Die Skala wird nun so gedreht, daß bei einem vollen Umlauf der Zeigerausschlag um den Mittelwert 0 symmetrisch schwankt. Hiernach werden die Speichen 3 so angezogen, daß der Zeigerausschlag immer geringer wird, bis er ganz verschwindet. Ein wesentlicher Vorteil der Fahrradzentrierhilfe besteht darin, daß die richtige Drehrichtung zum Spannen einer Speiche an der Meßuhr 52 abgelesen werden kann. Wird eine falsche Drehrichtung gewählt, so ist dies an der Meßuhr 52 sofort ablesbar, da sich der Zeiger nicht in Richtung der 0, sondern von dieser wegbewegt. Die Meßgenauigkeit der genannten Vorrichtung beträgt 0,02 mm. Mit Hilfe der Fahrradzentrierhilfe ist es problemlos möglich, den verbleibenden Schlag unter 0,2 mm zu bringen.

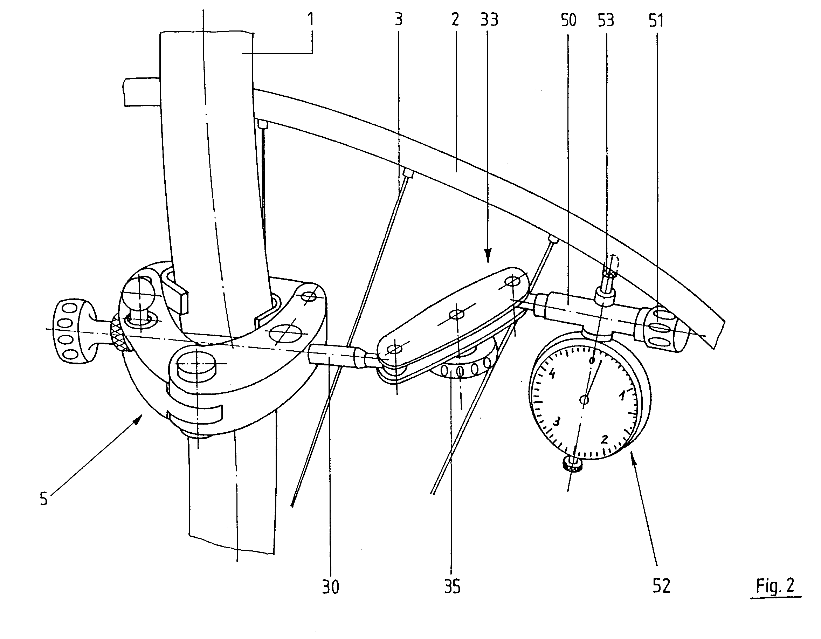

Als weitere Einsatzmöglichkeit kann mit der Fahrradzentrierhilfe natürlich auch der Höhenschlag einer Radfelge ausgemessen und korrigiert werden (Fig. 2). Dazu wird die Spannvorrichtung 5 so angebracht, daß der Teflon-Taststift 53 etwa radial an der Innenseite der Radfelge 2 anliegt. Die Korrektur des Höhenschlags erfolgt nun wie bei der Korrektur eines Seitenschlags. Die Speichen 3 werden so angezogen, daß der Höhenschlag kleiner wird, bis er gänzlich verschwindet.

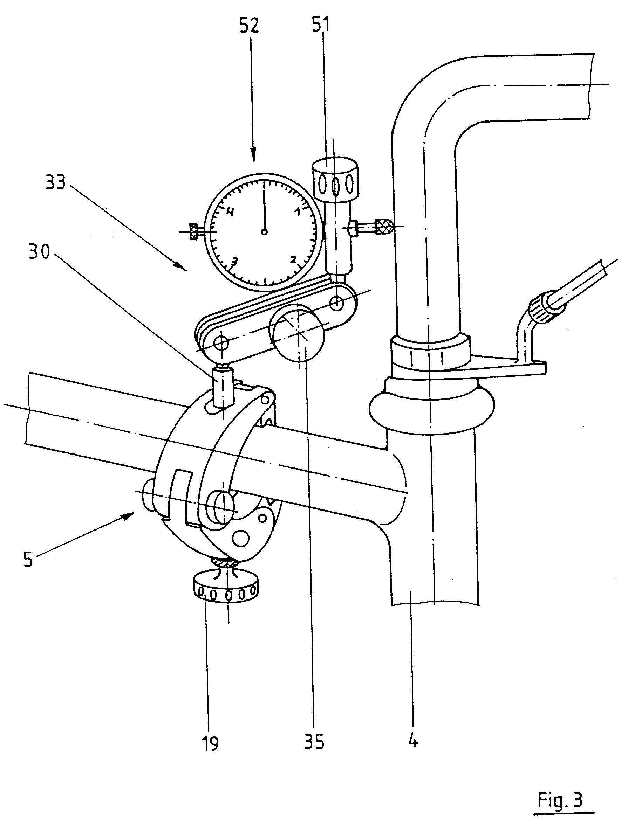

Eine weitere Einsatzmöglichkeit der Fahrradzentrierhilfe (Fig. 3) besteht darin, das Lenkkopfspiel auszumessen. Dazu wird die Spannvorrichtung 5 am Fahrradrahmen 4 so angebracht, daß nach Einstellung des Schwenkarms 33 der Teflon-Taststift 53 oberhalb des Lenkkopfs am Lenker anliegt.

## Patentansprüche

1. Fahrradzentrierhilfe, bestehend aus einer am Rahmen bzw. an der Gabel (1) eines Fahrrades anbringbaren Spannvorrichtung (5), einem Schwenkarm (33) und einer Meßuhr (52), deren Meßstift (53) an die auszumessende Felge (2) anlegbar ist, dadurch gekennzeichnet, daß der Schwenkarm (33) einerends mit der Spannvorrichtung (5) und anderenends mit der Meßuhr (52) dreh- und schwenkbar verbunden ist.

2. Fahrradzentrierhilfe nach Anspruch 1, dadurch gekennzeichnet, daß die Spannvorrichtung aus zwei Spannarmen (10, 11) besteht, die an ihren freien Enden jeweils V-förmige Spannbacken (13, 14 und 16) aufweisen und die mittels einer Spannschraube (19) über eine Zugstange (20) gegeneinander bewegbar sind.

3. Fahrradzentrierhilfe nach einem der vorhergehenden Ansprüchen, dadurch gekennzeichnet, daß der Schwenkarm (33) an seinen beiden Enden jeweils mittels Kugelgelenken (30, 60, 80) mit der Spannvorrichtung (5) einerseits und einem Uhrenhalter (50) der Meßuhr (52) andererseits verbunden ist.

4. Fahrradzentrierhilfe nach einem der vorhergehenden Ansprüche, dadurch gekennzeichnet daß der Schwenkarm (33) aus zwei mit einer Klemmschraube (35) gegeneinander spannbaren Teilen (33a, b) besteht, die Bohrungen (80) zur Aufnahme von kugelförmigen Enden von Kugelbolzen (30 bzw. 60) der Spannvorrichtung (5) bzw. des Uhrenhalters (50) aufweisen.

5. Fahrradzentrierhilfe nach einem der vorhergenden Ansprüche, dadurch gekennzeichnet, daß die Meßuhr (52) eine analoge Anzeige besitzt.

## Claims

1. Bicycle wheel centring aid, comprising a clamping device (5) to be fitted on the frame or the fork (1) of a bicycle, a swivel arm (33) and a dial gauge (52) whose measuring pin (53) can be applied to the rim (2) to be measured, characterized in that the swivel arm (33) is joined rotatably and pivotably at one end to the clamping device (5) and at the other end to the dial gauge (52).

2. Bicycle wheel centring aid according to Claim 1, characterized in that the clamping device comprises two clamping arms (10, 11) which each have V-shaped clamping jaws (13, 14 and 16) at their free ends and which can be moved with respect to one another via a connecting rod (20) by means of a clamping screw (19).

3. Bicycle wheel centring aid according to one of the preceding claims, characterized in that the swivel arm (33) is joined at each of its two ends by means of ball-and-socket joints (30, 60, 80) to the clamping device (5), on the one hand, and a dial holder (50) of the dial gauge (52), on the other hand.

4. Bicycle wheel centring aid according to one of the preceding claims, characterized in that the swivel arm (33) comprises two parts (33a, b) which can be clamped with respect to one another by a clamping screw (35) and which have bores (80) for receiving ball-shaped ends of ball pins (30 or 60) of the clamping device (5) or of the dial holder (50).

5. Bicycle wheel centring aid according to one of the preceding claims, characterized in that the dial gauge (52) has an analogue indicator.

## Revendications

1. Dispositif d'assistance au centrage des roues de bicyclette, constitué d'un dispositif de serrage que l'on peut monter sur le cadre de la fourche (1) d'une bicyclette, d'un bras oscillant (33) et d'un comparateur à cadran (52) dont le palpeur à tige (53) peut être appliqué sur la jante (2) à contrôler, caractérisé en ce que le bras oscillant (33) peut tourner sur lui-même et osciller, à une extrémité sur le dispositif de serrage (5), à l'autre extrémité sur le comparateur à cadran (52).

2. Dispositif selon la revendication 1, caractérisé en ce que le dispositif de serrage est composé de deux bras de serrage (10,11) dont chacun porte à son extrémité libre des mâchoires de serrage en forme de V (13, 14 et 16), un écrou de serrage (19) permettant de déplacer les bras l'un par rapport à l'autre par l'intermédiaire d'une tige de traction (20).

3. Dispositif selon une des revendications précédentes, caractérisé en ce que le bras oscillant (33) est relié à ses deux extrémités par l'intermédiaire d'articulations à rotule (30, 60, 80) d'une part au dispositif de serrage (5), d'autre part à un support (50) du comparateur à cadran (52).

4. Dispositif selon une des revendications précédentes, caractérisé en ce que le bras oscillant (33) est constitué de deux parties (33a, b) qui peuvent être rapprochées l'une de l'autre par l'action d'une vis de serrage (35), et qui comportent des alésages servant à recevoir les extrémités sphériques des pivots à rotule (30, 60) du dispositif de serrage (5 et du support de comparateur (50) respectivement.

5. Dispositif selon une des revendications précédentes, caractérisé en ce que le comparateur à cadran (52) est un indicateur analogique.
